# EUROPÄISCHE PATENTSCHRIFT

(11) **EP 2 401 891 B1**
(45) Veröffentlichungstag und Bekanntmachung des Hinweises auf die Patenterteilung: **16.04.2014**
(21) Anmeldenummer: 10720551.0
(22) Anmeldetag: 19.05.2010
(51) Int. Cl.: H01Q 21/08, H01Q 23/00, H04W 24/02

(54) **ANTENNENEINRICHTUNG, INSBESONDERE FÜR EINE MOBILFUNKANLAGE, MIT MEHREREN ZUGEORDNETEN FUNKTIONSEINHEITEN**
ANTENNA DEVICE, PARTICULARLY FOR A MOBILE RADIO SYSTEM, HAVING A PLURALITY OF ASSOCIATED FUNCTIONAL UNITS
AGENCEMENT D'ANTENNE, EN PARTICULIER POUR UNE INSTALLATION RADIO MOBILE, AVEC PLUSIEURS UNITÉS FONCTIONNELLES ASSOCIÉES

(30) Priorität: 20.05.2009 DE 102009022158
(43) Veröffentlichungstag der Anmeldung: 04.01.2012
(73) Patentinhaber: Kathrein-Werke KG, 83022 Rosenheim (DE)
(72) Erfinder: MANN, Burkhard, 83059 Kolbemoor (DE); SCHMID, Johann, 83083 Riedering (DE)
(74) Vertreter: Flach, Dieter Rolf Paul
(86) Internationale Anmeldenummer: PCT/EP2010/003071
(87) Internationale Veröffentlichungsnummer: WO 2010/133352

(56) Entgegenhaltungen:
- WO-A2-03/079484
- US-A1- 2004 004 943
- US-A1- 2007 161 348
- US-A1- 2009 040 106

## Beschreibung

Die Erfindung betrifft ein Antennensystem, insbesondere für eine Mobilfunkanlage, mit mehreren zugeordneten Funktionseinheiten nach dem Oberbegriff des Anspruches 1.

Mobilfunkantennen werden mehr und mehr mit fern steuerbaren oder fern abfragbaren Funktionen ausgestattet. In der Vergangenheit wurde dies durch optional extern montierbare Geräte oder Funktionsgruppen realisiert. Bekannte Anwendungen dieser Art sind die Steuerung des Down-Tilt einer Antenne, auch Remote Electrical Tilt (RET) genannt, oder die Überwachung und Steuerung eines Tower Mounted Amplifier (TMA) usw.

Funktionen neueren Datums sind die Erfassung von Antennen-Parametern wie die Azimuth-Ausrichtung, die mechanische Neigung, die Steuerung der Keulenbreite (Beamwidth), die Erfassung von Temperaturdaten, von mechanischen Lageveränderungen sowie die Erfassung der Geodaten der Antenne. Jeder dieser Funktionen wird durch eine eigene Funktionseinheit oder eine Kombination von Funktionseinheiten realisiert. Je nach Antennenausführung werden diese Funktionseinheiten teilweise oder vollständig mit in der Antenne integriert. Dabei eröffnen sich Möglichkeiten, dass gleichartige Anforderungen an die Funktionseinheiten hinsichtlich Kommunikation, Datenverwaltung und Funktionsumfang kombiniert werden.

Aus der US 2007/161 348 A1 ist ein gattungsbildendes Antennensystem zu entnehmen. Zur Steuerung, Überwachung und Messung der Strahlereinrichtungen (also der Antennen) sind Funktionseinheiten, nämlich so genannte RET-Einheiten vorgesehen, denen jeweils eine individuelle Busadresse zugeordnet ist. Die von einer externen Fernsteuereinheit erzeugten Steuerkommandos werden über einen externen Bus an die Funktionseinheiten gesendet, über den auch die von den Funktionseinheiten erzeugten Status-Daten an die Fernsteuereinheiten übertragen werden.

Aus der US 2008/0291116 A1 ist eine Lösung für die Steuerung mehrerer Funktionseinheiten in einem Gerät oder einer Antenne bekannt geworden, die einen so genannten Master-Controller umfasst, worüber in den Antenneneinheiten sog. Sub-Controller oder Slaves gesteuert werden. Der Master ist dabei mit einer entsprechenden Schnittstelle versehen, worüber eine kabelgebundene Verbindung zur externen Fernsteuereinheit besteht. Der nach außen hin, also zur Fernsteuereinheit (Remote Controller) sichtbare Master übernimmt dabei die Kommunikation mit den jeweiligen Slave-Funktionseinheiten, die in der Antenneneinrichtung untergebracht bzw. bei der Antenneneinrichtung zugeschaltet sind. Dabei kann der Master über einen antennengeräteinternen Kommunikationsbus die jeweiligen Kommandos an die jeweilige Slavefunktion weiterleiten. Die von einer Slavefunktion, also einer antenneninternen oder antennennahe untergebrachten Funktionseinheit erhaltenen Antwortsignale werden über den Master-Controller an den basisstationsseitigen Controller zurückgegeben, der auch als externe Fernsteuereinheit bezeichnet wird. Da nach außen für die externe Fernersteuereinheit nur der Master sichtbar ist, kann dieser durch einen einmaligen Adressiervorgang adressiert werden. Über Subadressen kann der Master die daran angeschlossenen individuellen Funktionseinheiten (Slaves) verwalten.

Aus der Erläuterung geht hervor, dass die Kommunikation der externen Fernsteuereinheit (Base Station Controller) mit den Slave-Einheiten (antenneninterne bzw. antennennahe Funktionseinheiten) immer über den Master-Controller erfolgt.

Schließlich ist eine Antennenanordnung auch aus der US 2009/040 106 A1 als bekannt zu entnehmen, bei der jede Funktionseinheit bidirektional über einen Bus mit der Fernsteuereinheit kommunizieren kann. Die Kommunikation zur Fernsteuereinheit übernimmt dabei die Funktionseinheit und nicht ein zwischengeschalteter Master-Controller.

Schließlich wird auch noch auf die DE 601 25 382 T2 verwiesen, die ebenfalls eine zellulare Antenne beschreibt.

In der DE 601 25 382 T2 sind diverse Ausführungsbeispiele gezeigt, bei denen mehrere Antennen im Abstand zueinander angeordnet sein können. Jede dieser Antenneneinrichtungen umfasst jeweils ein einziges Stellmittel, welches jeweils einen Aktor in der betreffenden Antenne ansteuert.

Die Betätigung des Aktors unter Ansteuerung des jeweiligen Stellmittels kann dabei auf unterschiedliche Weise erfolgen.

In einem Ausführungsbeispiel verläuft zwischen einer Basisstation und der jeweiligen Antenne ein separates HF-Speisekabel, worüber für jede Antenneneinrichtung auch die Steuerdaten übertragen werden.

In einem anderen Ausführungsbeispiel ist in einem der drei HF-Speisekabel eine Steuerdaten-Empfangseinrichtung vorgesehen, die die Steuerdaten für alle Antenneneinrichtungen über ein einziges HF-Speisekabel empfängt, aus dem HF-Speisekabel abzweigt und in eine separate serielle Leitung einspeist. Diese serielle Leitung führt zu einer ersten Steuerdaten-Empfangseinrichtung in der ersten Antenneneinrichtung, wobei die serielle Leitung dann unter Bewirkung einer Reihenschaltung eine Verbindung in der zweiten Antenneneinrichtung vorgesehenen zweiten Steuerdaten-Empfangseinrichtung und von dort zu der dritten Steuerdaten-Empfangsrichtung der dritten Antenneneinheit führt.

In einem nochmals abgewandelten Ausführungsbeispiel werden die Steuerdaten nicht über eine HF-Speiseleitung übermittelt, sondern über eine separate Leitung, die zu einer ersten Steuerdaten-Empfangseinrichtung und davon ebenfalls wieder im Sinne einer Reihenschaltung zu jeweils einer nächsten Steuerdaten-Empfangseinrichtung führt, die in einer nächsten Antenneneinrichtung untergebracht ist.

Aufgabe der vorliegenden Erfindung ist es demgegenüber, ein verbessertes Antennensystem zu schaffen, d.h. eine Antenne mit integrierten und/oder zugeordneten bzw. daran angeschlossenen internen Funktionseinheiten, die über eine antennenferne externe Funktionseinheit ansteuerbar sind.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Die Erfindung baut darauf auf, dass zwischen der externen Fernsteuereinheit (Remote Controller) und den antennennah bzw. den in der Antenne integrierten Funktionseinheiten eine Verbindung über einen direkten Kommunikationsbus eingerichtet ist, beispielsweise über eine Schnittstelle (z.B. eine RS-485-Schnittstelle) oder über ein Modem.

Die Erfindung weist eine Reihe von Vorteilen gegenüber dem Stand der Technik auf.

So lässt sich im Rahmen der Erfindung der Initialisierungsvorgang vereinfachen, indem die Vergabe der für die Kommunikation notwendigen Adressen optimiert wird. Mit einem einzigen Adressierungsvorgang, der Zuweisung der sogenannten Basis-Adresse, werden alle Funktionseinheiten adressiert und dann über individuelle Sub-Adressen, die fest vorgegeben der Unterscheidung und Adressierung der Funktionseinheiten innerhalb der Antenneneinrichtung dienen, unter Berücksichtigung eines möglichen Offset (auf den später noch eingegangen wird) angesprochen. Dies ist auch für in Kette geschaltene Antenneneinrichtungen möglich.

Ein weiterer Vorteil der Erfindung ist, dass eine Lösung aufgezeigt wird, bei der jede Funktionseinheit direkt und gleichberechtigt durch die Fernsteuereinheit ansprechbar ist. Die Fernsteuereinheit kann direkt über eine standardisierte Kommunikationsschnittstelle auf die einzelnen Funktionseinheiten zugreifen. Es entsteht ein sogenanntes Parallelprozessing und es wird vermieden nur über den Master zuzugreifen, der sich dann als Nadelöhr erweist.

Mit dem Ziel der Erweiterbarkeit der Kommunikationsstruktur durch in Kette hinzu geschalteter weiterer einzelner Funktionseinheiten oder Antenneneinrichtungen und der Möglichkeit der Kommunikation untereinander, direkt oder über einen Interface-Modul, eröffnet sich über die Mehrfachnutzung von Funktionseinheiten die Möglichkeit Kosten zu sparen.

Die Erfindung wird nachfolgend anhand von Ausführungsbeispielen unter Bezugnahme auf die Zeichnungen näher erläutert. Dabei zeigen im Einzelnen:
- Figur 1 :: eine schematische Ansicht einer Mobilfunk-Antennenanlage mit einer Basisstation;
- Figur 2 :: eine schematische Darstellung einer erfindungsgemäßen Antenneneinrichtung mit einer spezifischen Kommunikationsstruktur zwischen einer fernsteuerbaren Einheit und den in der Antenneneinrichtung integriert oder dazu zugeschaltet vorgesehenen Funktionseinheiten;
- Figur 3 :: eine schematische Darstellung eines typischen Kommunikationsablaufs zwischen einer fernsteuerbaren Einheit und zwei Funktionseinheiten;
- Figur 4 :: ein zu Figur 2 abweichendes erfindungsgemäßen Ausführungsbeispiel eines Antennensystems mit einem Shared Memory-Bereich;
- Figur 5 :: ein nochmals abgewandeltes Ausführungsbeispiel einer erfindungsgemäßen Antenneneinrichtung mit Ports, die nach einer Wired-Or Verknüpfung miteinander verbunden sind sowie geschlossen und geöffnet werden können, um darüber eine Synchronisation zwischen den Funktionseinheiten abzuwickeln;
- Figur 6 :: ein weiteres abgewandeltes Ausführungsbeispiel mit zusätzlich vorgesehenen Unter-Funktionseinheiten, die über eine Schnittstelle mit einer Funktionseinheit kommunizieren können;
- Figur 7 :: ein weiteres Ausführungsbeispiel mit einer extern zuschaltbaren Funktionseinheit;
- Figur 8 :: ein weiteres erfindungsgemäßes Ausführungsbeispiel, bei welchem mehrere Antenneneinrichtungen über ihren externen Kommunikationsbus zusammenschaltbar sind; und
- Figur 9 :: ein weiteres auf Figur 8 aufbauendes erfindungsgemäßes Ausführungsbeispiel, bei dem die weiteren zugeschalteten Antenneneinrichtungen über den gemeinsamen externen Kommunikationsbus lediglich mit einer fernsteuerbaren Einheit kommunizieren und darüber gesteuert werden.

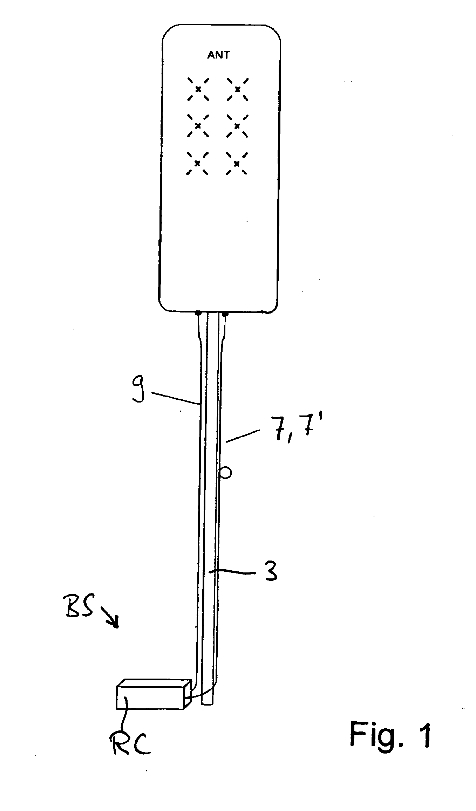

In Figur 1 ist eine Anordnung einer Mobilfunkstation gezeigt. Die zugehörige Mobilfunk-Basisstation BS umfasst einen Remote Controller RC, der nachfolgend teilweise auch aus Fernsteuereinheit RC bezeichnet wird. Dieser Remote Controller übernimmt im Wesentlichen alle Basisband-Funktionen einer Basisstation. Ferner ist in Figur 1 schematisch ein Antennenmast 3 sowie eine im oberen Bereich des Antennenmastes 3 montierte Antenneneinrichtung ANT beispielsweise mit einem oder mehreren Antennenarrays eingezeichnet.

Zwischen der Fernsteuereinheit RC und der Antenneneinrichtung ANT verlaufen im gezeigten Ausführungsbeispiel zwei Leitungen, nämlich eine Hauptleitung 7, die vorzugsweise aus einem Glasfaserkabel 7' besteht. Über diese Hauptleitung 7 werden in der Regel die Sende- und Empfangssignale sowie die Steuersignale für die in der Antenneneinheit, d. h. der Antenneneinrichtung ANT untergebrachten Funktionseinheiten (oder dort zugeschalteten Funktionseinheiten) übertragen. Übertragen wird also über die Hauptleitung 7 die Nutz- und Kontrolldaten. Daneben verläuft zwischen der Fernsteuereinheit RC und der Antenneneinrichtung ANT auch noch eine weitere Leitung 9, über welche beispielsweise eine Gleichstromversorgung für die in oder an der Antenneneinrichtung ANT vorgesehenen Komponenten und Funktionseinheiten möglich ist. Anstelle eines Glasfaserkabels kann natürlich auch in der Regel für jede Polarisation ein separates Speisekabel vorgesehen sein, worüber die entsprechende Kommunikation zwischen der Fernsteuereinheit RC und der Antenneneinrichtung ANT verläuft und worüber auch ein Gleichspannungsanteil (DC-Anteil) übertragen und beispielsweise über eine Bias-Tee-Schaltung ein- bzw. ausgekoppelt werden kann.

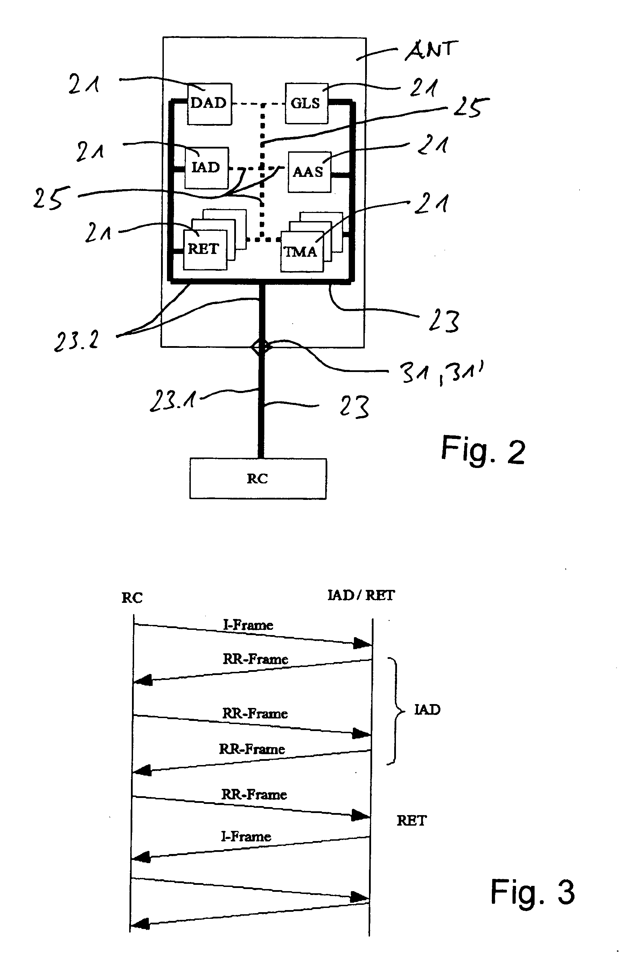

Anhand von Figur 2 ist nunmehr in schematischer Detaildarstellung ein in Figur 1 allgemein gezeigtes Antennensystem, welches nachfolgend teilweise auch als Antenneneinrichtung bezeichnet wird, mit einem externen Kommunikationsbus 23 (Kommunikationskanal) zur Herstellung einer Verschaltung zwischen der externen Fernsteuereinheit RC und den Funktionseinheiten 21 zum einen sowie ein weiterer interner Kommunikationsbus 25 (Signalisierungskanal) zum anderen zur Signalisierung und zum Datenaustausch zwischen den Funktionseinheiten wiedergegeben.

In dieser Anordnung ist mit ANT wiederum die Antenneneinrichtung allgemein mit einer Vielzahl von Strahler-Elementen oder -Einrichtungen 19 gezeigt, die vorzugsweise in zwei senkrecht zueinander stehenden Polarisationsebenen strahlen. Diese können bevorzugt in einem Winkel von +45° bzw. -45° gegenüber der Horizontalen oder Vertikalen ausgerichtet sein, wie dies für Antenneneinrichtungen nach dem Stand der Technik bekannt ist. Bei der Darstellung gemäß Figur 2 sind die vorstehend erwähnten Strahler-Elemente oder Strahler-Einrichtungen 19 nicht weiter angedeutet. In Figur 1 können diese Strahler in schematischer Form strichliert entnommen werden, die in den beiden senkrecht zueinander stehenden Polarisationen strahlen bzw. empfangen. Es wird insoweit häufig auch von einer X-Polarisation gesprochen. Beim Ausführungsbeispiel gemäß Figur 2 wie auch bei den folgenden Ausführungsbeispielen sind diese Strahlereinrichtungen 19 bei der bezeichneten Antenneneinrichtung ANT, die nachfolgend auch als Antenneneinrichtung ANT bezeichnet wird, nicht weiter angedeutet.

Diese Antenneneinrichtung umfasst neben den Strahlereinrichtungen 19 eine Vielzahl von in der Antenne integrierten oder antennennah zugeschalteten Antennen-Funktionseinheiten 21, die über den erwähnten Kommunikationsbus 23 (Kommunikationskanal 23) mit der antennenfernen, üblicherweise in der sog. Basisstation untergebrachten Base Station Controller verbunden sind, der, wie erwähnt, auch als externe Fernsteuereinheit RC (Remote Controller) bezeichnet wird.

Mit anderen Worten ist im gezeigten Ausführungsbeispiel gemäß Figur 2 zu entnehmen, dass sich der Kommunikationsbus 23 in einen ersten und zweiten externen Kommunikationsbus 23.1 gliedert, wobei sich der erste externe Kommunikationsbus 23.1 auf der Übertragungsstrecke zwischen der Fernsteuereinheit RC und der Antenneneinrichtung ANT erstreckt, und beispielsweise an einem Übergang 31 an der Antenneneinrichtung ANT in den weiteren externen Kommunikationsbus 23.2 übergeht, der innerhalb der Antenneneinrichtung ANT vorgesehen ist und dort zu den in der Antenneneinrichtung integriert untergebrachten oder dort zugeschalteten Funktionseinheiten 21 führt. Mit anderen Worten kann der basisstationsseitige externe Kommunikationsbus 23.1 direkt in den antennenseitigen externen Kommunikationsbus 23.2 übergehen, wobei an diesem Übergang 31 auch eine Schnittstelle 31' ausgebildet oder beispielsweise ein Modem vorgesehen sein kann.

Im gezeigten Ausführungsbeispiel sind sechs interne Funktionseinheiten 21 vorgesehen, nämlich
- DAD:: eine Neigungs-Einrichtung (Declination Antenna Device)
- RET:: eine fernsteuerbare Steuereinheit zur Einstellung des Absenkwinkels der Antenne (down-tilt-Winkels)
- GLS:: ein geographischer Orts-Sensor zur Detektion der geostationären Positionen der Antenne (Geographical Location Sensor)
- AAS:: eine Funktionseinheit zur Azimut-Ausrichtung der Antenne (Antenna Alignement Sensor)
- TMA:: ein antennenseitig montierter Antennenverstärker (Tower Mounted Amplifier)
- IAD:: eine Funktionseinheit zur Synchronisation und zum gegenseitigen Datenaustausch der Funktionseinheiten untereinander.

Mit anderen Worten werden bevorzugt mehrere unterschiedliche Funktionen für die Antenne, in der Regel separate Funktionseinheiten 21 oder Kombinationen von Funktionseinheiten vorgesehen. Wie erwähnt, werden je nach Antennenausführung diese Funktionseinheiten teilweise oder vollständig in der Antenneneinrichtung ANT integriert untergebracht oder sind antennennah zuschaltbar. Dabei eröffnet sich die Möglichkeit, dass gleichartige Anforderungen an die Funktionseinheiten hinsichtlich Kommunikation, Datenverwaltung und Funktionsumfang kombiniert werden.

Wie an sich bekannt ist, kann das Kommunikationsprotokoll zwischen der externen Fernsteuereinheit und den antennennahen Funktionseinheiten auf dem Standard der Gremien AISG und/oder 3GPP für die Steuerung der angeschlossenen Antennengeräte (Antenna Line Products ALD) basieren. Entsprechend diesen Standards ist die Kommunikation in drei Schichten eingeteilt, nämlich Layer 1, Layer 2 und Layer 7. Diese Schichten oder Layer bedeuten:
a) Layer 1: stellt die physikalische Verbindungsebene dar. Diese ist zum einen definiert für einen seriellen Bus basierend auf dem Schnittstellen-Standard RS485 und zum anderen für die Übertragung über das Feeder Cable unter Verwendung des Modulationsverfahrens On-Off-Keying. Für beide Übertragungsverfahren ist hinsichtlich Stromversorgung das Einschaltverhalten und die Leistungsaufnahme für den jeweiligen Anwendungsfall definiert.
b) Layer 2: stellt die Datenverbindungsschicht dar. Basierend auf der HDLC Spezifikation wird die Kommunikationsklasse UNC1,15,1 TWA (Two-Way-Alternativ) verwendet. Es ist definiert welche UNC Kommandos Anwendung finden, wie die für die Kommunikation notwendige Adressvergabe erfolgt und wie die HDLC-Parameter Window-Size und Information-Field-Length festgelegt werden. Ein Master, in der Regel der Base Station Controller, leitet die Kommunikation ein, adressiert den jeweiligen Slave und dieser generiert den jeweiligen Antwortframe zum Master. Dies kann eine Layer 2 oder eine Layer 7 Kommunikation sein.
c) Layer 7: stellt die Kommandos für die jeweilige Funktionseinheit dar. Die Kommandos sind eingeteilt in allgemeine und für alle Funktionseinheiten geltende Kommandos, den Common Procedure Set, und spezifischen der jeweiligen Anwendung bzw. Funktionseinheit zugeordneten Kommandos.

Nach dem Einschalten der Stromversorgung (Power On) wird vom Base Station Controller (Fernsteuereinheit RC) ermittelt, welche Funktionseinheiten sich am gemeinsamen Bus 23 befinden und jeder Funktionseinheit 21 wird eine Kommunikationsadresse zugewiesen. Dieser Vorgang ist relativ aufwändig, da jede Funktionseinheit 21 über ein Bus-Scan Verfahren eindeutig identifizierbar sein muss, und erst dann die eigentliche Adressierung erfolgen kann. Diese Kommunikation findet auf der Ebene Layer 2 mittels XID Frames statt.

Nach der Adressierung wird die Funktionseinheit mittels dem Layer 2 Frame SNRM (Set Normal Response Mode) in den Connected State versetzt und anschließend können Layer 7 Kommandos und Antworten übertragen werden.

Wird ein Kommando auf Layer 7 übertragen, so wird dafür der I-Frame (Instruction Frame) als Befehlsfolge verwendet. Entweder kann die Funktionseinheit sofort mit einem I-Frame antworten oder je nach Funktion ist es möglich, dass für die Bearbeitung und die Bereitstellung der Layer 7 Antwort eine gewisse Zeit benötigt wird.

Der Remote Controller RC fragt zyklisch in einer Polling Loop auf Layer 2, mittels des Befehls bzw. der Abfrage RR-Frame (Receiver Ready), alle Funktionseinheiten ab. Die Funktionseinheiten können entweder ebenso mit einem RR-Frame ihre Empfangsbereitschaft signalisieren oder mit einem anstehenden I-Frame die Antwort auf ein Layer 7 Kommando abliefern. Die Beantwortung der Polling Frames signalisiert dem Base Station Controller die Kommunikationsbereitschaft, bzw. holt so anstehende Antworten ab, die auch eigenständig von der Funktionseinheit - im Fall der Alarm Signalisierung - erzeugt werden können.

Eine Reihe von Informationen, die auf Ebene Layer 7 mittels des "Common Procedure Set" ausgetauscht werden, sind redundant in den einzelnen Funktionseinheiten verfügbar. Dies rührt daher, dass jede Funktionseinheit 21 eigenständig realisiert werden kann. Im Falle der Integration in eine Antenne ist es notwendig Vorsorge hinsichtlich Inkonsistenz dieser redundanten Daten zu treffen, da diese über mehrere Wege abfragbar und änderbar sind.

Aus der Darstellung gemäß Figur 2 geht bereits hervor, dass an dem erwähnten antennenseitigen externen Kommunikationsbus 23.2 also dem antennenseitigen Abschnitt des gesamten externen Kommunikationsbusses 23 alle Funktionseinheiten 21 gleichberechtigt eingeschaltet sind, so dass jede Funktionseinheit 21 alle Kommandos empfangen kann und die externe Fernsteuereinheit RC direkt mit jeder Funktionseinheit 21 kommunizieren kann. Jedes Funktionsmodul 21 kann dabei die aktive Rolle übernehmen und die Kommunikation mit der Fernsteuereinheit abwickeln.

Obgleich zur Synchronisation und zum gegenseitigen Datenaustausch grundsätzlich jede Funktionseinheit 21 dienen kann, ist hierfür in dem Ausführungsbeispiel gemäß Figur 2 bevorzugt die zusätzliche Einheit IAD vorgesehen.

Dieser Funktionseinheit IAD wird im gezeigten Ausführungsbeispiel die Aufgabe der grundsätzlichen Layer 2 Kommunikation zugeordnet. Die anwendungsbezogene Layer 7 Kommunikation wird dagegen von jeder Funktionseinheit 21 selbst übernommen. D.h., dass im Falle einer Layer 7 Kommunikation die gesamte Kommunikation von der jeweiligen Funktionseinheit selbst übernommen wird, einschließlich der Layer 2 Kommunikation (Layer 2 Frames). Über den in Figur 2 zusätzlich vorgesehenen internen Signalisierungskanal 25, über den alle Funktionseinheiten 21 in Verbindung stehen, können die einzelnen Funktionseinheiten 21 Aktivitäten und Statusänderungen synchronisieren, Informationen von redundanten Daten austauschen etc.

Bezüglich des Funktionsaufbaus nach Figur 2 ist eine Variante gezeigt, bei der eine Verschaltung des externen Kommunikationsbusses (Kommunikationskanals) 23 zu den einzelnen, gleichberechtigten Funktionseinheiten 21 zu ersehen ist. Jede Funktionseinheit 21 kann das Kommando der externen Fernsteuereinheit RC empfangen und kann die aktive Rolle übernehmen, um die Layer 7 Kommunikation mit der Fernsteuereinheit RC abzuwickeln.

Zur Synchronisation und zum gegenseitigen Datenaustausch sind die internen Funktionseinheiten 21 über einen Multi-Master-Kommunikationsbus (Signalisierungsbus) 25 miteinander verschaltet, also einem internen Kommunikationsbus 25.

Die Funktionalität der generellen Layer 2 Kommunikation mit dem RC kann einer Funktionseinheit zugeordnet werden. In diesem Beispiel ist diese Funktion dem IAD zugeordnet. Das IAD übernimmt die Bearbeitung von Layer 2 Kommandos sowie auch die Aufbereitung der Layer 2 Antworten.

Die Synchronisation und Abstimmung der Zuständigkeit zur Kommandoaufbereitung Layer 2 bzw. Layer 7 zwischen IAD und einem der anderen Funktionseinheiten kann
i) zum einen über den internen Kommunikationsbus 25 (d.h. den internen Kommunikationskanal 25, der nachfolgend teilweise auch als Signalisierungsbus oder Signalisierungskanal 25 bezeichnet wird) erfolgen, und
ii) zum anderen ist dies auch über eine zeitliche Zuordnung der Antwort Aufbereitung für IAD und Funktionseinheit möglich. Bei dieser Art der zeitlichen Synchronisation wird die Layer 2 Antwort durch das IAD erst nach einem definierten Zeitintervall bereitgestellt, allerdings unter der Bedingung, dass nicht im davor liegenden Zeitintervall die Layer 7 Antwort durch eine Funktionseinheit übernommen wurde.

Die Synchronisation ist notwendig im Fall eines Layer 2 Polling des RC hinsichtlich vorliegender Layer 7 Kommandos der Funktionseinheiten.

In Figur 3 ist ein typischer Kommunikationsablauf zwischen der Fernsteuereinheit RC zum einen und einer Funktionseinheit 21, beispielsweise in Form der Funktionseinheit RET bzw. der Funktionseinheit IAD dargestellt.

Dabei ist in Figur 3 die Aufteilung der Layer 2 und Layer 7 Kommunikation wiedergegeben, und zwar in der zeitlichen Abfolge von oben nach unten.

In der Regel wird die Kommunikation von der Fernsteuereinheit RC mit einem I-Frame, also einem sog. Instruction Frame (Instruktionssignal) auf der Schicht "Layer 7" eingeleitet. Über die Basis- und Sub-Adresse wird die Funktionseinheit 21, hier die Funktionseinheit RET bzw. IAD adressiert. Die RET-Funktionseinheit 21 bearbeitet das Kommando und die Bearbeitung überschreitet in diesem Falle das Antwortzeitfenster.

In diesem Fall übernimmt die Funktionseinheit IAD die für diesen Fall vorgesehene Layer 2 Antwort. Sobald die RET-Funktionseinheit 21 die Bearbeitung abgeschlossen hat und die Layer 7 Antwort aufbereitet hat, wird mit dem nächsten RR-Frame (also einem Signal, dass der Empfänger bereit ist - Receiver Ready) von der Fernsteuereinheit RC die Layer 7 Antwort von der RET-Funktionseinheit 21 übernommen.

In dem Ausführungsbeispiel gemäß Figur 2 ist ferner mit dem Bezugszeichen 31 der Übergang von dem auf der Übertragungsstrecke zwischen der Fernsteuereinheit RC und der Antenneneinrichtung ANT vorgesehenen externen Kommunikationsbus 23.1 zum antennenseitigen externen Kommunikationsbus 23.2 dargestellt. Im gezeigten Ausführungsbeispiel sind dabei die beiden vorstehend genannten externen Kommunikationsbusse 23.1 und 23.2 direkt miteinander verbunden, gehen also ineinander über.

Abweichend dazu kann hier aber auch am Übergang 31 eine Schnittstelle 31' vorgesehen sein, beispielsweise in Form der Schnittstellen-Standards RS-485, der für die digitale leitungsgebundene, differentielle oder auch serielle Datenübertragung geeignet ist. Möglich ist aber auch die Verwendung eines Modems etc. Auch andere Abwandlungen sind hier denkbar.

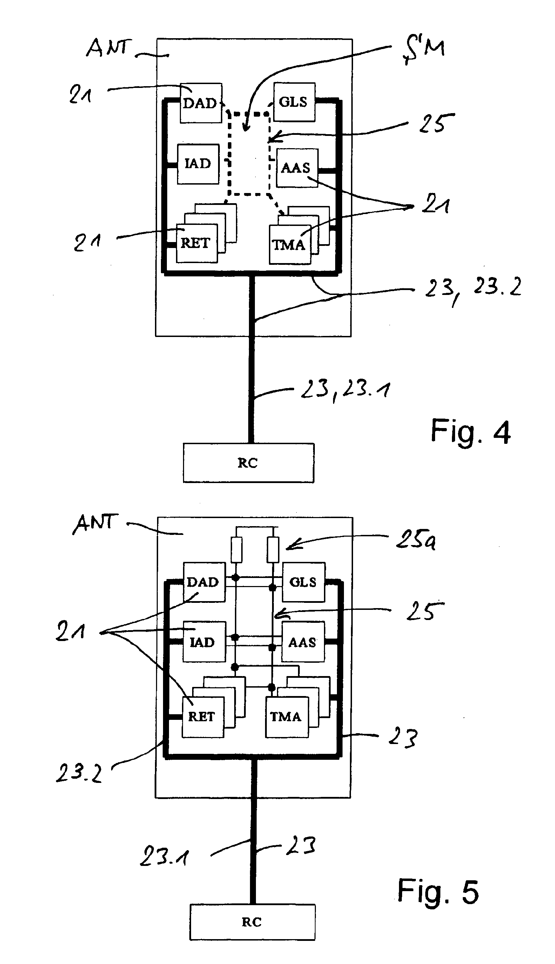

Nachfolgend wird auf das Ausführungsbeispiel gemäß Figur 4 Bezug genommen, in welchem ein anderes Beispiel für die Realisierung des internen Signalisierungskanals 25 gezeigt ist.

Figur 4 zeigt ein Shared Memory SM zur Synchronisation und zum gegenseitigen Datenaustausch der Funktionseinheiten unter einander. Auch redundante gemeinsame Daten können in diesem Shared Memory SM abgelegt werden und über eine der Funktionseinheiten abgefragt werden. Mit anderen Worten wird also der interne Kommunikationsbus, d.h. der sog. Signalisierungsbus in diesem Fall durch das Shared Memory SM, also der Speichereinrichtung SM gebildet, der den mehreren Funktionseinheiten gemeinsam zusteht.

Das erwähnte Shared Memory SM bzw. ein Bereich davon kann zusätzlich auch zur Ablage redundanter Daten dienen, die einzelnen Funktionseinheiten 21 zugeordnet sind. Dies reduziert den gesamten Speicherbedarf und trägt zur Effizienzerhöhung insgesamt bei.

Nachfolgend wird auf das Ausführungsbeispiel gemäß Figur 5 Bezug genommen.

Figur 5 zeigt die Verschaltung von Open Collector Ports 25a der Funktionseinheiten 21 zur Synchronisation und zum gegenseitigen Informationsaustausch der Funktionseinheiten untereinander. Den einzelnen Funktionszuständen kann je eine Open-Collector-Leitung zugeordnet werden. Durch die Open-Collector-Verschaltung entsteht je Leitung eine verdrahtete ODER Verknüpfung (Wired-Or), die in beliebiger Hinsicht genutzt werden kann, z.B. dass alle Funktionseinheiten die Zuweisung der Basis Adresse registriert haben.

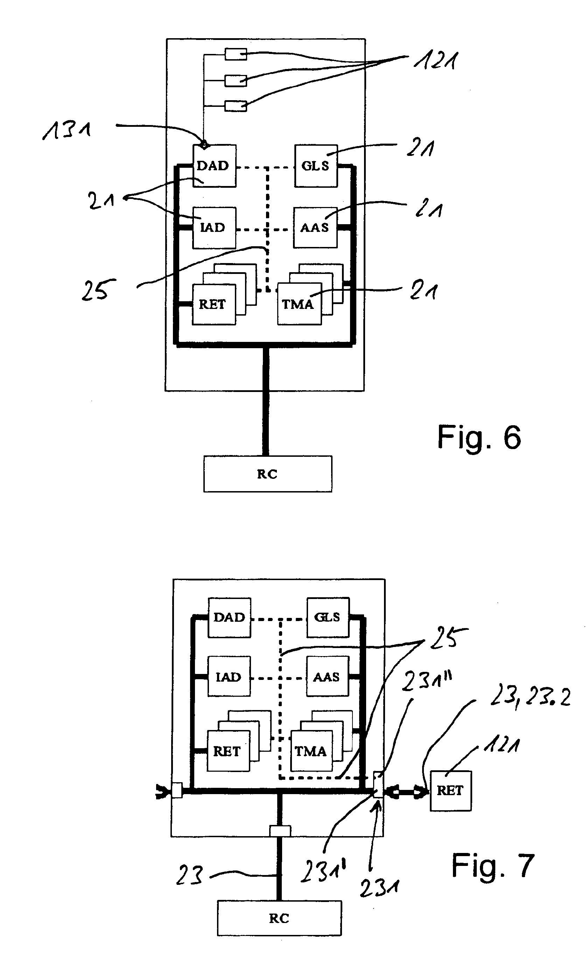

Nachfolgend wird auf das Ausführungsbeispiel gemäß Figur 6 Bezug genommen, in welchem gezeigt ist, dass die Antenneneinrichtung ANT auch noch über untergeordnete Funktionseinheiten, sog. Sub-Funktionseinheiten 121 verfügt. Diese Sub-Funktionseinheiten 121 sind beispielsweise einer bestimmten Funktionseinheit 21 zugeordnet. Die betreffende Funktionseinheit 21 kann z.B. über ein dieser Funktionseinheit zugeordnetes Interface 131 (Schnittstelle) die Sub-Funktionseinheiten 121 steuern und mit diesen kommunizieren. Zusätzliche derartige Sub-Funktionseinheiten 121 können auch anderen Funktionseinheiten 121 zugeordnet und über separate Schnittstellen angesteuert werden.

Anhand von Figur 7 ist ein Antennensystem mit mehreren Funktionseinheiten und angeschalteter externer Funktionseinheit 121 gezeigt. Die externe Funktionseinheit 121 ist ebenso mit dem externen Kommunikationsbus 23, 23.2 und mit dem internen Kommunikationsbus oder Synchronisationskanal 25 verbunden. Die entsprechenden Schnittstelleneinrichtungen 231 mit einer Schnittstelle 231' für den Kommunikationsbus 23, 23.2 sowie einer Schnittstelle 231" für den Signalisierungs- bzw. internen Synchronisationskanal 25, d. h. der Kommunikationsbus 25, sind in Figur 7 eingezeichnet.

Bei dem Ausführungsbeispiel gemäß Figur 7 ist lediglich eine einzige externe Funktionseinheit 121 gezeigt, beispielsweise die Funktionseinheit RET, wie sie anhand von Figur 2 bereits beschrieben wurde. Ebenso können aber andere Funktionseinheiten oder mehrere derartige Funktionseinheiten extern angeschlossen sein.

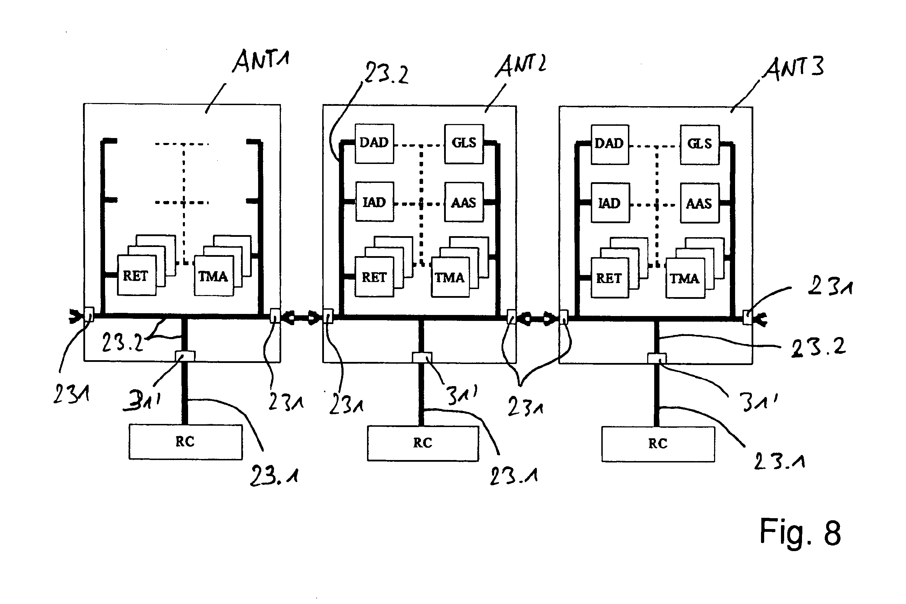

Schließlich wird auf eine weitere abgewandelte Variante gemäß Figur 8 Bezug genommen, welche ein Antennensystem mit in Reihe verschalteten einzelnen Antenneneinrichtungen zeigt.

Die drei Antenneneinrichtungen ANT1, ANT2 und ANT3 gemäß dem Ausführungsbeispiel nach Figur 8 sind gleich, identisch oder ähnlich aufgebaut, weisen jeweils eine in der Antenneneinrichtung ANT1, ANT2 bzw. ANT3 integriert untergebrachte Kommunikationsbus-Struktur 23.1 auf, die Teil des sog. "externen Kommunikationsbusses 23" ist sowie die zugehörigen internen Funktionseinheiten 21, wie sie anhand der vorausgegangenen Ausführungsbeispiele bereits erläutert wurden.

Darüber hinaus weisen diese Antennensysteme jeweils ein Interface, also eine externe Schnittstelleneinrichtung 231 auf, worüber die einzelnen internen Kommunikationsbus-Strukturen 23 der Antennensysteme zusammengeschaltet sind bzw. zusammenschaltbar sind, d.h beliebig verkettet werden können. Von daher können auch weitere Antennensysteme hinzugeschaltet werden, so dass mit anderen Worten mehrere Antennensysteme bezüglich ihres sog. externen Kommunikationsbusses 23 in Reihe verschaltet sind. Bei einer entsprechenden Busstruktur muss aber eine Verschaltung nicht zwingend in Reihe erfolgen. Auch sich verzweigende Busstrukturen sind möglich und zulässig.

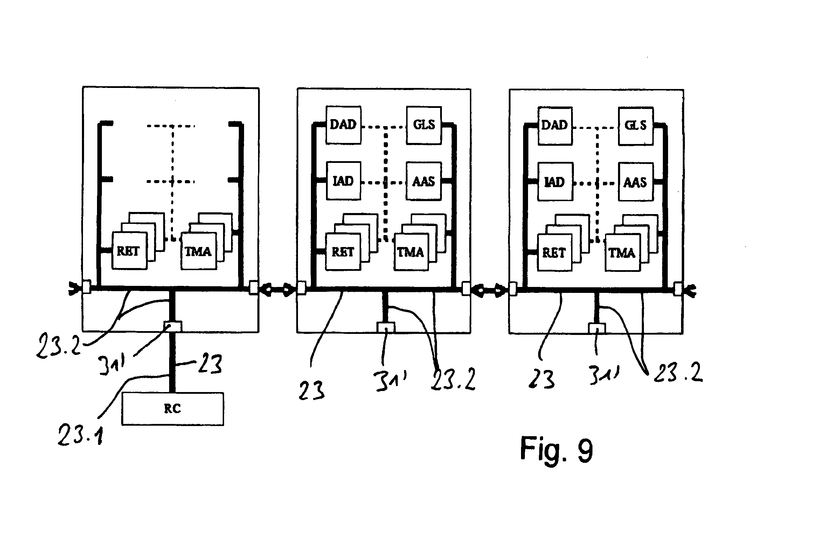

Schließlich ist in Figur 9 dargestellt, dass alle Antennensysteme zusätzlich eine Schnittstelleneinrichtung umfassen, die nachfolgend auch kurz als Schnittstelle 31' bezeichnet wird, worüber der jeweilige übertragungsstreckenseitige externe Kommunikationsbus 23.1 und der antennenseitige externe Kommunikationsbus 23.2 miteinander verbunden oder aber auch voneinander getrennt werden können. Grundsätzlich ist über die jeweilige erwähnte Schnittstelle 31' das betreffende Antennensystem mit der externen Fernsteuereinheit RC verbunden.

Der antennenseitige externe Kommunikationsbus 23.2 kann an einem oder mehreren zusätzlichen Ports (Schnittstelleneinrichtungen 231) herausgeführt sein, so dass die Verbindung mehrerer Antenneneinrichtungen ANT oder auch das Anschalten einer oder mehrerer externer einzelner Funktionseinheiten 121 möglich ist (ähnlich wie in Figur 7 dargestellt).

Während des Einschaltvorganges können an dieses Port angeschlossene Antennen oder Funktionseinheiten gegenseitig identifiziert und Adressbereiche oder ein Offset für die internen Subadressen vereinbart werden. Dies ermöglicht die Kommunikation mit gleichartigen Antennensystemen über den gleichen Kommunikationskanal unter Beibehaltung der optimierten Adressierung.

Der Kommunikationskanal zur jeweiligen externen Fernsteuereinheit ist in diesem Zeitraum deaktiviert oder es wird "Busy" bzw. "Not Ready" signalisiert, weil die entsprechende Verbindung zwischen der zugehörigen Fernsteuereinheit RC und der zugehörigen Antenneneinrichtung ANT zumindest temporär unterbrochen ist.

Die durch die Zusammenschaltung zusätzlichen Funktionsysteme ANT2, ANT3 usw. zu einem bestehenden Antennensystem ANT1 in die gemeinsame externe Kommunikationsbus-Struktur 23 eingebundenen zusätzlichen Funktionseinheiten 21 (die durch die zugeschalteten Antenneneinrichtungen ANT2, ANT3 usw. hinzugekommen sind) können beispielsweise der ersten Fernsteuereinheit RC, die zur ersten Antenneneinrichtung ANT1 gehört, als zusätzliche Funktionseinheit mitgeteilt werden, und zwar mit den jeweiligen Sub-Adress-Bereichen. Dies eröffnet die Möglichkeit, dass nur einmal vorhandene Funktionseinheiten von mehreren externen Fernsteuereinheiten genutzt werden können. Dazu ist ein Ab- und Zuschalten der externen Funktionseinheiten als auch der externen fernsteuerbaren Schnittstellen 31' bzw. 231 vorgesehen.

Der gesamte Aufbau kann so sein, dass bei mehreren zusammengeschalteten Antennensystemen nach einer definierten und/oder vorgebbaren Zeit (also nach dem Power-On) der Kommunikationsbus 23 zur Fernsteuereinheit bezüglich weiterer zugeschalteter Antennensysteme abgeschaltet wird und die Detektion der angeschalteten weiteren Antennesysteme beispielsweise nur über eine verbleibende Kommunikationsbus-Struktur 23 zu einer aktiv verbleibenden Fernsteuereinheit RC durchgeführt wird.

Dabei kann nach der Detektion der externen Antennensysteme auch ein Offset für den Sub-Adressbereich bezüglich der in den anderen zugeschalteten Antennensystemen integriert vorgesehenen Funktionseinheiten 21 übergeben werden, so dass über ein primäres Antennensystem mit einer zugehörigen Fernsteuereinheit RC auch die externen Funktionseinheiten 21 der zugeschalteten Antenneneinrichtungen ANT2, ANT3 mit verwaltet werden können, wie dies in Figur 9 dargestellt ist.

Die An- und Abschaltung des externen Kommunikationsbusses kann dabei in Abhängigkeit der adressierten Sub-Adresse erfolgen. Die notwendige Adresse für die Kommunikation zwischen der Fernsteuereinheit RC und den Funktionseinheiten kann dabei aus einer Basis-Adresse und einer internen Sub-Adresse bestehen, wobei die Basisadresse durch Vorbelegung fest vergeben ist und/oder mittels einer Hardware eingestellt werden kann, beispielsweise mittels DIP-Schalter. Auch der oben erwähnte Offset für die internen Sub-Adressen für die Funktionseinheiten der zugeschalteten Antenneneinrichtungen ANT2, ANT3 kann beispielsweise durch Vorbelegung fest vorgegeben werden.

Anhand von Figuren 8 und 9 ist gezeigt, dass die mehreren Antenneneinrichtungen ANT1 bis ANT3 über einen realen Kommunikationsbus 23 direkt miteinander verschaltet sind. Teilweise oder grundsätzlich können die einen oder mehreren zusätzlichen Antenneneinrichtungen ANT2 und ANT3 beispielsweise mit der ersten Antenneneinrichtung ANT1 auch über eine Funkverbindung miteinander verbunden sein, so dass der externe Kommunikationsbus zum Teil auch über eine Funkstrecke mit realisiert wird.

## Patentansprüche

1. Antennensystem mit den folgenden Merkmalen:
- mit einer oder mehreren Strahlereinrichtungen,
- mit mehreren Funktionseinheiten (21) zur Überwachung, Messung und Steuerung von Parametern der Antenneneinrichtung (ANT),
- die Funktionseinheiten (21) sind über einen gemeinsamen externen Kommunikationsbus (23) miteinander verbunden,
- der externe Kommunikationsbus (23) ist direkt oder über eine Schnittstelle (31') mit einer externen Fernsteuereinheit verbunden,
- jede Funktionseinheit (21) ist über den bidirektionalen externen Kommunikationsbus (23) mit der Fernsteuereinheit verbunden,
- die Konfiguration, die Steuerung und/oder die Abfrage einer oder mehrerer Funktionseinheiten (21) der zumindest einen Strahlereinrichtung erfolgt über den gemeinsamen externen Kommunikationsbus (23),
- die Funktionseinheiten sind dermaßen ausgestaltet, dass jeweils die durch Polling adressierte Funktionseinheit die Kommunikation zur Fernsteuereinheit übernimmt,
**gekennzeichnet durch** die folgenden weiteren Merkmale:
- für die zumindest eine Strahlereinrichtung ist ferner ein interner Kommunikationsbus (25) zum Austausch von Informationen und/oder Aktionszuständen zwischen den in der zumindest einen Strahlereinrichtung angeschlossenen Funktionseinheiten (21) vorgesehen.

2. Antennensystem nach Anspruch 1, **dadurch gekennzeichnet,**
- **dass** die notwendige Adresse für die Kommunikation zwischen der Fernsteuereinheit und den Funktionseinheiten aus einer Basis-Adresse und einer internen Sub-Adresse besteht, und
- **dass** das Antennensystem dermaßen ausgestaltet ist, dass die Zuweisung der Basisadresse durch die Fernsteuereinheit mittels eines einzigen Adressierungsvorganges für mehrere oder alle Funktionseinheiten (21) wirksam ist.

3. Antennensystem nach Anspruch 2, **dadurch gekennzeichnet, dass** die Funktionseinheiten (21) derart ausgestaltet sind, dass die Aufgabe der Adressentgegennahme und die Aufgabe der Bestätigung der Adresse einer beliebigen Funktionseinheit (31) zugewiesen wird.

4. Antennensystem nach Anspruch 2 oder 3, **dadurch gekennzeichnet, dass** die Funktionseinheiten (21) derart aufgebaut sind, dass die Zuweisung der Basisadresse durch jede Funktionseinheit (21) von den anderen Funktionseinheiten (21) selbstständig mitgehört und über den internen Kommunikationsbus (25) quittiert wird.

5. Antennensystem nach einem der Ansprüche 2 bis 4, **dadurch gekennzeichnet, dass** die Funktionseinheiten (21) so ausgestaltet sind, dass die Information der Basisadresse über den internen Kommunikationsbus (25) an andere Funktionseinheiten (21), insbesondere jeder anderen Funktionseinheit (21), mitgeteilt wird.

6. Antennensystem nach einem der Ansprüche 1 bis 5, **dadurch gekennzeichnet, dass** das Antennensystem so ausgestaltet ist, dass ein Sub-, Teil- oder Unter-Adressenbereich über einen Offset zu einem anderen Adressbereich verschoben wird.

7. Antennensystem nach einem der Ansprüche 1 bis 6, **dadurch gekennzeichnet, dass** die Antenneneinrichtung so aufgebaut ist, dass die Funktionseinheit (21), die eine Kommunikation mit der Fernsteuereinheit übernimmt, den anderen Funktionseinheiten (21) die Kommunikationsbearbeitung über den internen Kommunikationsbus (25) signalisiert.

8. Antennensystem nach einem der Ansprüche 1 bis 7, **dadurch gekennzeichnet, dass** der interne Kommunikationsbus (25) einen Shared-Memory-Speicherbereich (SM) sowie Verbindungen zu den einzelnen Funktionseinheiten (21) umfasst.

9. Antennensystem nach einem der Ansprüche 1 bis 8, **dadurch gekennzeichnet, dass** der interne Kommunikationsbus (25) über 1 bis N verdrahtete "ODER"-Leitungen (45) realisiert ist und jeder Leitung (45) eine Funktion zugeordnet ist, wobei N eine ganze natürliche Zahl darstellt.

10. Antennensystem nach einem der Ansprüche 1 bis 9, **dadurch gekennzeichnet, dass** der interne Kommunikationsbus (25) aus einem vom externen Kommunikationsbus (23) getrennten, nach außen nicht sichtbaren internen Multi-Master-Kommunikationsbus aufgebaut ist oder diesen umfasst.

11. Antennensystem nach einem der Ansprüche 1 bis 10, **dadurch gekennzeichnet, dass** der externe Kommunikationsbus (23) aus der Antenneneinrichtung (ANT, ANT1) herausgeführt und über eine Schnittstelle (231') vorzugsweise in Form eines Steckverbinders mit einer weiteren Antenneneinrichtung (ANT2, ANT3) und/oder einer externen Funktionseinheit (121) verkettet ist.

12. Antennensystem nach einem der Ansprüche 1 bis 11, **dadurch gekennzeichnet,**
- **dass** der externe Kommunikationsbus (23) in einen von der Fernsteuereinheit kommenden, übertragungsstreckenseitigen externen Kommunikationsbus (23.1) und einen antennenseitigen externen Kommunikationsbus (23.2) gegliedert ist, und
- **dass** das Antennensystem Mittel, vorzugsweise eine schaltbare Schnittstelle (31'), zum Zuschalten bzw. Abtrennen des übertragungsstreckenseitigen externen Kommunikationsbus (23.1) zu bzw. von dem antennenseitigen externen Kommunikationsbus (23.2) aufweist.

13. Antennensystem nach einem der Ansprüche 1 bis 12, **dadurch gekennzeichnet, dass** mehrere Antenneneinrichtungen (ANT1, ANT2, ANT3), d.h. deren Einrichtungen für ihren externen Kommunikationsbus (23) über eine Funkverbindung verbunden sind.

14. Antennensystem nach einem der Ansprüche 11 bis 13, **dadurch gekennzeichnet, dass** das Antenennsystem so ausgestaltet ist, dass in einer definierten und/oder vorgebbaren Zeit nach der Zuschaltung der Leistungsversorgung und/oder der Inbetriebnahme der Antenneneinrichtung (ANT; ANT1, ANT2, ANT3) eine oder einige der bezüglich ihres externen Kommunikationsbusses (23) zusammengeschalteten Antenneneinrichtungen (ANT1, ANT2, ANT3) von der zugehörigen Fernsteuereinheit abgeschaltet werden und eine Detektion zur Ermittlung weiterer abgeschalteter Antenneneinrichtungen (ANT; ANT1, ANT2, ANT3) durchgeführt wird.

15. Antennensystem nach Anspruch 14, **dadurch gekennzeichnet, dass** das Antennensystem so ausgestaltet ist, dass nach der Detektion einer weiteren externen Antenneneinrichtung (ANT2, ANT3) ein Offset für den Sub- Adressbereich bezüglich der in den weiteren Antenneneinrichtungen (ANT2, ANT3) vorgesehenen Funktionseinheiten (21) von einer ersten Antenneneinrichtung (ANT1) an eine weitere Antenneneinrichtung (ANT2, ANT3) übergeben wird und diese in den weiteren Antenneneinrichtungen vorgesehenen Funktionseinheiten über die der ersten Antenneneinrichtung (ANT, ANT1) zugeschalteten Fernsteuereinheit mitverwaltet werden.

16. Antennensystem nach Anspruch 15, **dadurch gekennzeichnet, dass** die An- und Abschaltung des externen Kommunikationsbusses (23) in Abhängigkeit der adressierten Sub-Adresse für die zugeschalteten Funktionseinheiten (21) der zugeschalteten Antenneneinrichtungen (ANT2, ANT3) erfolgt.

17. Antennensystem nach einem der Ansprüche 1 bis 16, **dadurch gekennzeichnet, dass** die notwendige Adresse für die Kommunikation zwischen der Fernsteuereinheit und den Funktionseinheiten aus einer Basis-Adresse und einer internen Sub-Adresse besteht und die Basisadresse durch Vorbelegung fest vergeben ist.

18. Antennensystem nach einem der Ansprüche 1 bis 17, **dadurch gekennzeichnet, dass** die notwendige Adresse für die Kommunikation zwischen der Fernsteuereinheit und den Funktionseinheiten aus einer Basis-Adresse und einer internen Sub-Adresse besteht, und die Basisadresse mittels einer Hardware einstellbar ist, beispielsweise mittels DIP-Schalter.

19. Antennensystem nach einem der Ansprüche 2 bis 18, **dadurch gekennzeichnet, dass** der Offset für die internen Sub-Adressen durch Vorbelegung fest vergeben ist.

20. Antennensystem nach einem der Ansprüche 2 bis 18, **dadurch gekennzeichnet, dass** der Offset für die internen Sub-Adressen mittels einer Hardware einstellbar ist, beispielsweise mittels DIP-Schalter.

21. Antennensystem nach Anspruch 8, **dadurch gekennzeichnet, dass** redundante Daten, die einzelnen Funktionseinheiten (21) zugeordnet sind, ebenfalls in dem Shared Memory gespeichert sind.

22. Antennensystem nach einem der Ansprüche 1 bis 21, **dadurch gekennzeichnet, dass** in einer Antenneneinrichtung (ANT1, ANT2, ANT3) vorgesehene Funktionseinheiten (21), die in einer anderen Antenneneinrichtung (ANT1, ANT2, ANT3) nicht vorhanden sind, von dieser Antenneneinrichtung (ANT1, ANT2, ANT3) bzw. den zugehörigen Fernsteuereinheiten mit nutzbar sind.

## Claims

1. Antenna system comprising the following features:
- one or more emitter devices,
- a plurality of functional units (21) for monitoring, measuring and controlling parameters of the antenna device (ANT),
- the functional units (21) are interconnected via a common external communication bus (23),
- the external communication bus (23) is connected directly or via an interface (31') to an external remote control unit,
- each functional unit (21) is connected to the remote control unit via the bidirectional external communication bus (23),
- the configuration, control and/or querying of one or more functional units (21) of the at least one emitter device is carried out via the common external communication bus (23),
- the functional units are configured in such a way that in each case the functional unit addressed by polling handles the communication with the remote control unit,
**characterised by** the following further features:
- an internal communication bus (25) is also provided for the at least one emitter device for exchanging information and/or action states between the functional units (21) connected in the at least one emitter device.

2. Antenna system according to claim 1, **characterised in that**,
- the required address for communication between the remote control unit and the functional units consists of a base address and of an internal subaddress, and
- the antenna system is configured in such a way that the allocation of the base address by the remote control unit is effective for a plurality of or for all the functional units (21) by means of a single addressing procedure.

3. Antenna system according to claim 2, **characterised in that** the functional units (21) are configured in such a way that the task of accepting an address and the task of confirming the address is allocated to any desired functional unit (31).

4. Antenna system according to either claim 2 or claim 3, **characterised in that** the functional units (21) are constructed in such a way that the allocation of the base address by each functional unit (21) is automatically monitored by the other functional units (21) and is acknowledged by the internal communication bus (25).

5. Antenna system according to any of claims 2 to 4, **characterised in that** the functional units (21) are configured in such a way that the information of the base address is communicated via the internal communication bus (25) to other functional units (21), in particular any other functional unit (21).

6. Antenna system according to any of claims 1 to 5, **characterised in that** the antenna system is configured in such a way that a sub, partial or secondary address region can be moved via an offset to another address region.

7. Antenna system according to any of claims 1 to 6, **characterised in that** the antenna device is constructed in such a way that the functional unit (21) which handles a communication with the remote control unit signals the communication processing to the other functional units (21) via the internal communication bus (25).

8. Antenna system according to any of claims 1 to 7, **characterised in that** the internal communication bus (25) comprises a shared memory storage region (SM) and connections to the individual functional units (21).

9. Antenna system according to any of claims 1 to 8, **characterised in that** the internal communication bus (25) is produced via 1 to N wired "OR" lines (45) and a function is allocated to each line (45), with N representing a whole natural number.

10. Antenna system according to any of claims 1 to 9, **characterised in that** the internal communication bus (25) is constructed from or comprises an internal multi-master communication bus which is not visible from outside and is separate from the external communication bus (23).

11. Antenna system according to any of claims 1 to 10, **characterised in that** the external communication bus (23) is guided out of the antenna device (ANT, ANT1) and is linked preferably in the form of a pin-and-socket connector with a further antenna device (ANT2, ANT3) and/or an external functional unit (121) via an interface (231').

12. Antenna system according to any of claims 1 to 11, **characterised in that**,
- the external communication bus (23) is divided into a transmission-path-side external communication bus (23.1) coming from the remote control unit and an antenna-side external communication bus (23.2), and
- the antenna system means preferably has a switchable interface (31') for connecting or detaching the transmission-path-side external communication bus (23.1) to or from the antenna-side external communication bus (23.2).

13. Antenna system according to any of claims 1 to 12, **characterised in that** a plurality of antenna devices (ANT1, ANT2, ANT3), i.e. the external communication bus (23) devices thereof, are connected via a radio link.

14. Antenna system according to any of claims 11 to 13, **characterised in that** the antenna system is configured in such a way that, in a defined and/or predeterminable time period after the connection of the power supply and/or the activation of the antenna device (ANT; ANT1, ANT2, ANT3), one or some of the antenna devices (ANT1, ANT2, ANT3), which are interconnected in respect of their external communication bus (23), is/are disconnected from the associated remote control device and a detection procedure for ascertaining further disconnected antenna devices (ANT; ANT1, ANT2, ANT3) is carried out.

15. Antenna device according to claim 14, **characterised in that** the antenna system is configured in such a way that after the detection of a further external antenna device (ANT2, ANT3), an offset for the subaddress region in respect of the functional units (21) provided in the further antenna devices (ANT2, ANT3) is transmitted from a first antenna device (ANT1) to a further antenna device (ANT2, ANT3) and these functional units which are provided in the further antenna devices are managed via the remote control unit connected to the first antenna device (ANT, ANT1).

16. Antenna system according to claim 15, **characterised in that** the external communication bus (23) is switched on and off depending on the addressed subaddress for the connected functional units (21) of the connected antenna devices (ANT2, ANT3).

17. Antenna system according to any of claims 1 to 16, **characterised in that** the required address for the communication between the remote control unit and the functional units consists of a base address and of an internal subaddress, and the base address is permanently allocated by pre-allocation.

18. Antenna system according to any of claims 1 to 17, **characterised in that** the required address for the communication between the remote control unit and the functional units consists of a base address and of an internal subaddress, and the base address can be set by hardware, for example by DIP switches.

19. Antenna system according to any of claims 2 to 18, **characterised in that** the offset for the internal subaddresses is permanently allocated by pre-allocation.

20. Antenna system according to any of claims 2 to 18, **characterised in that** the offset for the internal subaddresses can be set by hardware, for example by DIP switches.

21. Antenna system according to claim 8, **characterised in that** redundant data allocated to individual functional units (21) is also stored in the shared memory.

22. Antenna system according to any of claims 1 to 21, **characterised in that** functional units (21) which are provided in one antenna device (ANT1, ANT2, ANT3) and are not present in another antenna device (ANT1, ANT2, ANT3) can also be used by this antenna device (ANT1, ANT2, ANT3) or by the associated remote control units.

## Revendications

1. Système d'antenne avec les caractéristiques suivantes :
- avec un ou plusieurs dispositifs de rayonnement,
- avec plusieurs unités fonctionnelles (21) destinées à surveiller, mesurer et piloter les paramètres du dispositif d'antenne (ANT),
- les unités fonctionnelles (21) sont reliées les unes aux autres par l'intermédiaire d'un bus de communication (23) externe commun,
- le bus de communication (23) externe est relié directement ou via une interface (31') à une unité de commande à distance externe,
- chaque unité fonctionnelle (21) est reliée à l'unité de commande à distance par l'intermédiaire du bus de communication (23) externe bidirectionnel,
- la configuration, le pilotage et/ou la requête d'une ou plusieurs unités fonctionnelles (21) d'au moins un dispositif de rayonnement a lieu via le bus de communication (23) externe commun,
- les unités fonctionnelles sont disposées de sorte que l'unité fonctionnelle adressée par invitation prend en charge la communication vers l'unité de commande à distance,
**caractérisé par** les autres caractéristiques suivantes :
- pour au moins un dispositif de rayonnement, un bus de communication (25) interne est en outre prévu pour échanger des informations et/ou le statut des actions entre les unités fonctionnelles (21) connectées dans au moins un dispositif à rayonnement.

2. Système d'antenne selon la revendication 1, **caractérisé en ce que**
- l'adresse requise pour permettre la communication entre l'unité de commande à distance et les unités fonctionnelles se compose d'une adresse de base et d'une adresse auxiliaire interne, et
- le système d'antenne est agencé de sorte que l'attribution de l'adresse de base est activée par l'unité de commande à distance au moyen d'une opération d'adressage individuelle pour plusieurs unités fonctionnelles (21) ou la totalité.

3. Système d'antenne selon la revendication 2, **caractérisé en ce que** les unités fonctionnelles (21) sont agencées de sorte que la tâche de réception de l'adresse et la tâche de confirmation de l'adresse sont attribuées à une unité fonctionnelle (31) quelconque.

4. Système d'antenne selon la revendication 2 ou 3, **caractérisé en ce que** les unités fonctionnelles (21) sont conçues de sorte que l'attribution de l'adresse de base est écoutée de façon autonome par les autres unités fonctionnelles (21) et confirmée par l'intermédiaire du bus de communication (25) interne.

5. Système d'antenne selon l'une quelconque des revendications 2 à 4, **caractérisé en ce que** les unités fonctionnelles (21) sont agencées de sorte que les informations de l'adresse de base sont communiquées à d'autres unités fonctionnelles (21), notamment à chacune des unités fonctionnelles (21) restantes, par l'intermédiaire du bus de communication (25) interne.

6. Système d'antenne selon l'une quelconque des revendications 1 à 5, **caractérisé en ce que** le système d'antenne est agencé de sorte qu'un domaine de sous-adresse, d'adresse partielle ou d'adresse auxiliaire est déplacé vers un autre domaine d'adresse par un décalage.

7. Système d'antenne selon l'une quelconque des revendications 1 à 6, **caractérisé en ce que** le dispositif d'antenne est conçu de sorte que l'unité fonctionnelle (21), qui prend en charge une communication avec l'unité de commande à distance, signale aux autres unités fonctionnelles (21) le traitement de la communication par l'intermédiaire du bus de communication (25) interne.

8. Système d'antenne selon l'une quelconque des revendications 1 à 7, **caractérisé en ce que** le bus de communication (25) interne comprend une zone de stockage à mémoire partagée (SM) ainsi que des connexions vers les unités fonctionnelles (21) individuelles.

9. Système d'antenne selon l'une quelconque des revendications 1 à 8, **caractérisé en ce que** le bus de communication (25) interne est réalisé par 1 à N lignes (45) "OU" câblées et **en ce qu'**une fonction est affectée à chaque ligne (45), N représentant un nombre entier.

10. Système d'antenne selon l'une quelconque des revendications 1 à 9, **caractérisé en ce que** le bus de communication (25) interne est conçu à partir d'un bus de communication principal interne non visible de l'extérieur, séparé d'un bus de communication (23) externe ou **en ce qu'**il comprend celui-ci.

11. Système d'antenne selon l'une quelconque des revendications 1 à 10, **caractérisé en ce que** le bus de communication (23) externe sort du dispositif d'antenne (ANT, ANT1) et est relié à un autre dispositif d'antenne (ANT2, ANT3) et/ou à une unité fonctionnelle externe (121) via une interface (231'), de préférence sous la forme d'une prise.

12. Système d'antenne selon l'une quelconque des revendications 1 à 11, **caractérisé en ce que**
- le bus de communication (23) externe est divisé en un bus de communication (23.1) externe avec transmission au sol provenant de l'unité de commande à distance et en un bus de communication (23.2) externe installé au niveau de l'antenne, et
- le système d'antenne comporte un moyen, de préférence une interface commutable (31'), permettant d'éteindre ou de couper le bus de communication (23.1) externe avec transmission au sol vers ou à partir du bus de communication (23.2) externe installé au niveau de l'antenne.

13. Système d'antenne selon l'une quelconque des revendications 1 à 12, **caractérisé en ce que** plusieurs dispositifs d'antenne (ANT1, ANT2, ANT3), c'est-à-dire les dispositifs destinés au bus de communication (23) externe, sont reliés par une liaison radio.

14. Système d'antenne selon l'une quelconque des revendications 11 à 13, **caractérisé en ce que** le système d'antenne est agencé de sorte qu'un ou plusieurs dispositifs d'antenne (ANT1, ANT2, ANT3) raccordés aux bus de communication (23) sont éteints par l'unité de commande à distance correspondante dans un délai défini et/ou prédéfini après la mise en circuit de l'alimentation et/ou la mise en service du dispositif d'antenne (ANT ; ANT1, ANT2, ANT3) et **en ce qu'**une opération de détection est réalisée pour déterminer les autres dispositifs d'antennes raccordés (ANT ; ANT1, ANT2, ANT3).

15. Système d'antenne selon la revendication 14, **caractérisé en ce que** le système d'antenne est conçu de sorte qu'un décalage est transmis par un premier dispositif d'antenne (ANT1) vers un autre dispositif d'antenne (ANT2, ANT3) pour le domaine de sous-adresse relatif aux unités fonctionnelles (21) prévues dans les autres dispositifs d'antenne (ANT2, ANT3) et **en ce que** ces dispositifs sont cogérés dans les autres unités fonctionnelles prévues dans les dispositifs d'antenne via l'unité de commande à distance allumée dans le premier dispositif d'antenne (ANT, ANT1).

16. Système d'antenne selon la revendication 15, **caractérisé en ce que** le bus de communication (23) externe est allumé et éteint en fonction de la sous-adresse adressée pour les unités fonctionnelles (21) allumées des dispositifs d'antenne (ANT2, ANT3) allumés.

17. Système d'antenne selon l'une quelconque des revendications 1 à 16, **caractérisé en ce que** l'adresse requise pour la communication entre l'unité de commande à distance et les unités fonctionnelles se compose d'une adresse de base et d'une sous-adresse interne et **en ce que** l'adresse de base est attribuée par défaut.

18. Système d'antenne selon l'une quelconque des revendications 1 à 17, **caractérisé en ce que** l'adresse requise pour la communication entre l'unité de commande à distance et les unités fonctionnelles se compose d'une adresse de base et d'une sous-adresse interne et **en ce que** l'adresse de base peut être définie au moyen d'un équipement, par exemple au moyen d'un commutateur DIP.

19. Système d'antenne selon l'une quelconque des revendications 2 à 18, **caractérisé en ce que** le décalage est prédéfini par défaut pour les sous-adresses internes.

20. Système d'antenne selon l'une quelconque des revendications 2 à 18, **caractérisé en ce que** le décalage est réglable au moyen d'un équipement pour les sous-adresses internes, par exemple au moyen d'un commutateur DIP.

21. Système d'antenne selon la revendication 8, **caractérisé en ce que** les données redondantes qui sont affectées aux unités fonctionnelles (21) individuelles sont également enregistrées dans la mémoire partagée.

22. Système d'antenne selon l'une quelconque des revendications 1 à 21, **caractérisé en ce que** les unités fonctionnelles (21) prévues dans un dispositif d'antenne (ANT1, ANT2, ANT3), et qui n'existent pas dans un autre dispositif d'antenne (ANT1, ANT2, ANT3), peuvent être utilisées par ce dispositif d'antenne (ANT1, ANT2, ANT3) ou par les unités de commande à distance correspondantes.
